# EUROPÄISCHE PATENTSCHRIFT

(11) **EP 1 968 822 B1**
(45) Veröffentlichungstag und Bekanntmachung des Hinweises auf die Patenterteilung: **05.05.2010**
(21) Anmeldenummer: 06819317.6
(22) Anmeldetag: 08.11.2006
(51) Int. Cl.: B60S 1/16

(54) **ANTRIEBSVORRICHTUNG**
DRIVE DEVICE
DISPOSITIF D'ENTRAINEMENT

(30) Priorität: 28.12.2005 DE 102005062721
(43) Veröffentlichungstag der Anmeldung: 17.09.2008
(73) Patentinhaber: ROBERT BOSCH GMBH, 70442 Stuttgart (DE)
(72) Erfinder: DIETRICH, Jan, 77815 Buehl (DE); HAWIGHORST, Achim, 77830 Buehlertal (DE)
(86) Internationale Anmeldenummer: PCT/EP2006/068203
(87) Internationale Veröffentlichungsnummer: WO 2007/079994

(56) Entgegenhaltungen:
- DE-C- 734 423
- FR-A- 1 352 696
- FR-A1- 2 827 241

## Beschreibung

Die Erfindung betrifft eine Antriebsvorrichtung, insbesondere für eine Scheibenwischvorrichtung, mit mindestens einer Welle.

Insbesondere bei Antriebsvorrichtungen, die direkt mit einem Wischarm verbunden sind, die also ohne ein Gestänge arbeiten, muss der Wischarm in seiner Parkposition arretiert werden können, damit er nicht durch den Fahrtwind aus der Parkposition gedrückt werden kann. Die bisher aus dem Stand der Technik bekannten Arretierungen sind sehr fertigungsaufwändig und somit kostenintensiv.

Aus der DE-C-734 423 ist eine Scheibenwischvorrichtung bekannt, im Bereich einer Kupplung von Wischer und Antrieb eine Feder angreifen zu lassen, so dass das selbsttätige Wegdrehen in eine Parkposition bewirkt wird.

Die Erfindung hat die Aufgabe, die eingangs genannte Antriebsvorrichtung dahingehend zu verbessern, dass der Wischarm mit einem geringeren Fertigungsaufwand als bisher in seiner Parkposition arretiert werden kann.

Die Erfindung löst die gestellte Aufgabe mit einer Antriebsvorrichtung gemäß Anspruch 1. Somit erzeugt das Band und/oder die Schnur an der Welle eine bestimmte Reibungskraft, die die Welle und somit auch den Wischarm in seiner Parkposition arretiert.

Besonders einfach zu realisieren und wirksam ist die Arretierung, da das Band und/oder die Schnur eine gewickelte Feder ist.

Die Feder ist zusammendrückbar und/oder auseinanderdrückbar sein. Wenn die Feder zusammengedrückt wird, dann drückt sie gegen die Welle, wodurch eine die Welle arretierende Reibungskraft entsteht. Wenn die Feder auseinandergedrückt wird, dann nimmt die Reibungskraft zwischen der Feder und der Welle ab, so dass die Arretierung wieder gelöst wird.

Nach dem gekennzeichneten Teil des Anspruch 1 lässt sich die Feder mittels eines elektrischen Magnetfeldes zusammendrücken und/oder auseinanderdrücken. Somit kann die Feder zusammengedrückt oder auseinandergedrückt werden, sobald eine elektrische Spannung an einen Anker eines Wischermotors angelegt wird. Wenn der Wischermotor ausgeschaltet wird, nimmt die Feder durch ihre Vorspannung wieder ihre ursprüngliche Form an.

Wenn die in dem Band und/oder in der Schnur wirkende Spannung verändert werden kann, dann können die Welle und der Wischarm mit dem Band und/oder mit der Schnur sowohl arretiert als auch die Arretierung wieder gelöst werden.

Um die Feder zusammendrücken und/oder auseinanderdrücken zu können, kann sie mit einem ihrer Enden mit einem bewegbaren Auslöseelement verbindbar sein.

In einer besonders einfachen Ausführungsform kann das Auslöseelement plattenförmig ausgebildet sein.

Wenn das plattenförmige Auslöseelement aus einem magnetischen Material, insbesondere aus einem ferromagnetischen Material gefertigt ist, dann kann die Feder zusammengedrückt oder auseinander gedrückt werden, sobald an den Anker des Wischermotors eine elektrische Spannung angelegt wird.

In einer ebenfalls sehr einfachen Ausführungsform ist es jedoch auch möglich, das Auslöseelement als einen an einem Zahnrad angeordneten Vorsprung auszuführen.

Vorteilhafterweise kann die mindestens eine Welle eine Ankerwelle, eine Welle eines Zahnrades oder dergleichen sein. Versuche haben gezeigt, dass schon geringe Reibungskräfte zwischen der Feder und der Ankerwelle ausreichen, um die Ankerwelle und somit den oder die mit der Ankerwelle zusammenwirkenden Wischarme zu arretieren.

Bevorzugt kann die Antriebsvorrichtungen mindestens einen Wischermotor und/oder mindestens ein Getriebe aufweisen.

Die Vorteile der erfindungsgemäßen Antriebsvorrichtung treten bei einer Antriebsvorrichtung, die direkt mit mindestens einem Wischarm verbunden ist, die also zwischen dem Wischarm und dem Wischermotor kein Gestänge besitzt, besonders deutlich hervor.

Außerdem betrifft die Erfindung eine Scheibenwischvorrichtung, insbesondere für ein Kraftfahrzeug, die erfindungsgemäß eine Antriebsvorrichtung nach einem der Ansprüche 1 bis 9 aufweist.

Nachfolgend werden verschiedene Ausführungsbeispiele der erfindungsgemäßen Antriebsvorrichtung anhand der beiliegenden Zeichnungen näher erläutert.

Im Einzelnen zeigen:
- Fig. 1: eine Schnittansicht durch eine erste Ausführungsform einer Antriebsvorrichtung;
- Fig. 2: eine Schnittansicht durch eine zweite Ausführungsform der Antriebsvorrichtung;
- Fign. 3 und 4: eine Schnittansicht durch eine dritte Ausführungsform der Antriebsvorrichtung.

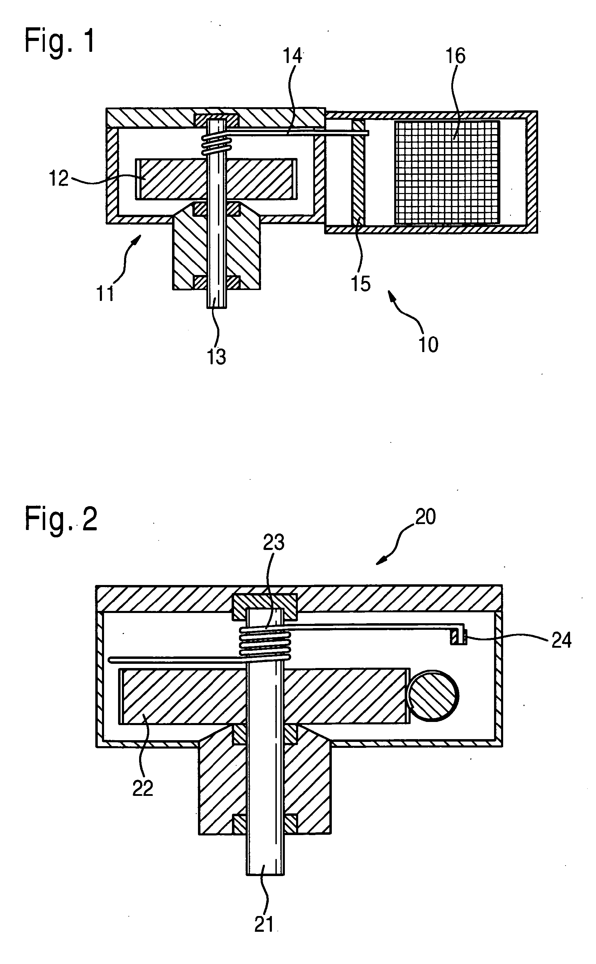

Fig. 1 zeigt eine Antriebsvorrichtung 10 mit Getriebe 11, das ein Zahnrad 12 aufweist. Das Zahnrad 12 ist auf einer Welle 13 gelagert, um die eine Feder 14 geschlungen ist. Die Feder 14 erzeugt auf der Welle 13 eine Reibungskraft, wodurch die Welle 13 und somit auch ein hier nicht näher dargestellter mit der Welle 13 zusammenwirkender Wischarm arretiert werden kann.

Die Feder 14 ist mit einem plattenförmigen Auslöseelement 15 verbunden. Gegenüber von dem plattenförmigen Auslöseelement 15 ist ein Elektromagnet 16 angeordnet. Wenn an den Elektromagneten 16 eine elektrische Spannung angelegt wird, beispielsweise beim Einschalten einer Scheibenwischvorrichtung, dann wird das Auslöseelement 15 entweder vom Elektromagneten 16 angezogen oder vom Elektromagneten 16 abgestoßen, wodurch die Feder 14 auseinandergedrückt wird, so dass die Reibungskraft zwischen der Feder 14 und der Welle 13 reduziert und somit die Arretierung gelöst wird. Sobald die Scheibenwischvorrichtung wieder ausgeschaltet wird und keine elektrische Spannung mehr an dem Elektromagneten 16 anliegt, wird die Feder 14 wieder zusammengedrückt, wodurch die Reibungskraft zwischen der Feder 14 und der Welle 13 zunimmt und somit die Welle 13 und der mit ihr zusammenwirkenden Wischarm arretiert wird.

Fig. 2 zeigt eine Antriebsvorrichtung 20 mit einem auf einer Welle 21 angeordneten Zahnrad 22. Um die Welle 21 ist eine Feder 23 geschlungen, mit der die Welle 21 und der mit ihr zusammenwirkende Wischarm lösbar arretiert werden kann.

Mit der Feder 23 ist ein Gestänge 24 verbunden, durch dessen Betätigung die Feder 23 zusammengedrückt oder auseinandergedrückt werden kann, um die Welle 21 zu arretieren oder, um die Arretierung zu lösen.

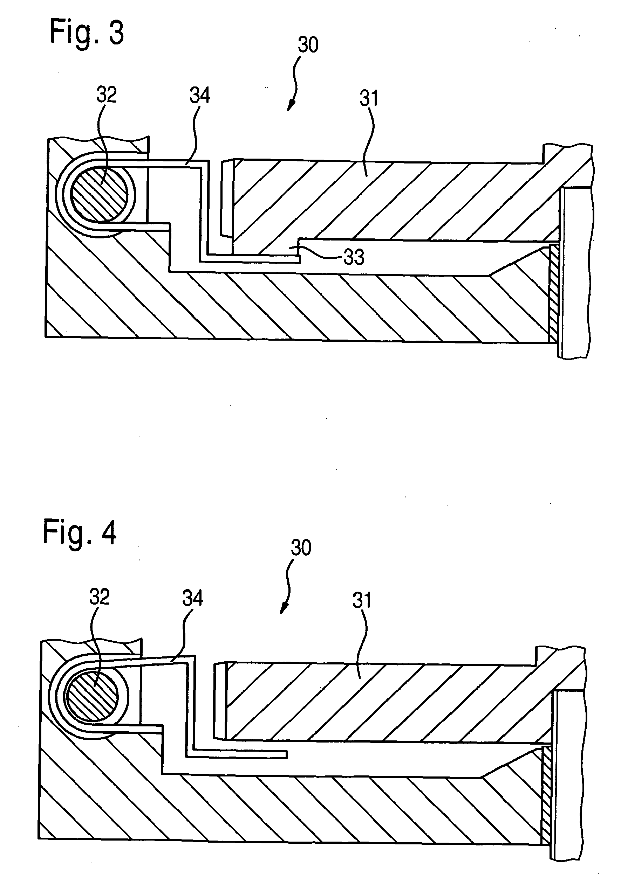

Die Fign. 3 und 4 zeigen eine Antriebsvorrichtung 30 mit einem Zahnrad 31 und einer Welle 32, die beispielsweise die Welle eines Ankers eines hier nicht näher gezeigten Wischermotors sein kann.

Das Zahnrad 31 ist mit einem Vorsprung 33 versehen (siehe Fig. 3), durch den eine um die Welle 32 geschlungene Feder 34 zusammengedrückt werden kann, um die Welle 32 zu arretieren. Um die Feder 34 zusammenzudrücken, wird der Vorsprung 33 an die Feder 34 angelegt. Sobald der Vorsprung 33 nicht mehr an der Feder 34 anliegt (siehe Fig. 4), wird die Feder 34 aufgrund ihrer Vorspannung wieder auseinandergedrückt, wodurch die Arretierung wieder gelöst wird.

## Patentansprüche

1. Antriebsvorrichtung (10, 20, 30), insbesondere für eine Scheibenwischvorrichtung, mit mindestens einer Welle (13, 21, 32), wobei um die mindestens eine Welle (13, 21, 32) ein Band und/oder eine Schnur mit einer bestimmten Spannung schlingbar ist, wobei das Band und/oder die Schnur eine gewickelte, zusammendrückbare und/oder auseinanderdrückbare Feder (14, 23, 34) ist, **dadurch gekennzeichnet, dass** die Feder (14, 23, 34) mittels eines elektrischen Magnetfeldes zusammendrückbar und/oder auseinanderdrückbar ist.

2. Antriebsvorrichtung (10, 20, 30) nach Anspruch 1, **dadurch gekennzeichnet, dass** die in dem Band und/oder in der Schnur wirkende Spannung veränderbar ist.

3. Antriebsvorrichtung (10, 30) nach einem der Ansprüche 1 oder 2, **dadurch gekennzeichnet, dass** die Feder (14, 34) mit einem ihrer Enden mit einem bewegbaren Auslöseelement (15) verbindbar ist.

4. Antriebsvorrichtung (10) nach Anspruch 3, **dadurch gekennzeichnet, dass** das Auslöseelement (15) plattenförmig ausgebildet ist.

5. Antriebsvorrichtung (10) nach Anspruch 4, **dadurch gekennzeichnet, dass** das plattenförmige Auslöseelement (15) aus einem magnetischen Material, insbesondere aus einem ferromagnetischen Material gefertigt ist.

6. Antriebsvorrichtung (30) nach Anspruch 3, 4 oder 5, **dadurch gekennzeichnet, dass** das Auslöseelement ein an einem Zahnrad angeordneter Vorsprung (33) ist.

7. Antriebsvorrichtung (10, 20, 30) nach einem der Ansprüche 1 bis 6, **dadurch gekennzeichnet, dass** die mindestens eine Welle (13, 21, 32) eine Ankerwelle, eine Welle eines Zahnrades (12, 22) oder dergleichen ist.

8. Antriebsvorrichtung (10, 20, 30) nach einem der Ansprüche 1 bis 7, **dadurch gekennzeichnet, dass** die Antriebsvorrichtung (10, 20, 30) mindestens einen Wischermotor und/oder mindestens ein Getriebe aufweist.

9. Antriebsvorrichtung (10, 20, 30) nach einem der Ansprüche 1 bis 8, **dadurch gekennzeichnet, dass** sie direkt mit mindestens einem Wischarm verbunden ist.

10. Scheibenwischvorrichtung, insbesondere für ein Kraftfahrzeug, **dadurch gekennzeichnet, dass** sie eine Antriebsvorrichtung (10, 20, 30) nach einem der Ansprüche 1 bis 9 aufweist.

## Claims

1. Drive apparatus (10, 20, 30), in particular for a windscreen wiping apparatus, having at least one shaft (13, 21, 32), it being possible to wrap a belt and/or a cord around the at least one shaft (13, 21, 32) with a specific tension, with the belt and/or the cord being a wound spring (14, 23, 34) which can be compressed and/or pushed apart, **characterized in that** the spring (14, 23, 34) can be compressed and/or pushed apart by means of an electric magnetic field.

2. Drive apparatus (10, 20, 30) according to Claim 1, **characterized in that** the tension effective in the belt and/or in the cord can be varied.

3. Drive apparatus (10, 30) according to either of Claims 1 and 2, **characterized in that** the spring (14, 34) can be connected to a moveable tripping element (15) by way of one of the ends of the said spring.

4. Drive apparatus according (10) according to Claim 3, **characterized in that** the tripping element (15) is of plate-like design.

5. Drive apparatus (10) according to Claim 4, **characterized in that** the plate-like tripping element (15) is produced from a magnetic material, in particular from a ferromagnetic material.

6. Drive apparatus (30) according to Claim 3, 4 or 5, **characterized in that** the tripping element is a projection (33) which is arranged on a gear wheel.

7. Drive apparatus (10, 20, 30) according to one of Claims 1 to 6, **characterized in that** the at least one shaft (13, 21, 32) is an armature shaft, a shaft of a gear wheel (12, 22) or the like.

8. Drive apparatus (10, 20, 30) according to one of Claims 1 to 7, **characterized in that** the drive apparatus (10, 20, 30) has at least one wiper motor and/or at least one gear mechanism.

9. Drive apparatus (10, 20, 30) according to one of Claims 1 to 8, **characterized in that** it is directly connected to at least one wiping arm.

10. Windscreen wiping apparatus, in particular for a motor vehicle, **characterized in that** it has a drive apparatus (10, 20, 30) according to one of Claims 1 to 9.

## Revendications

1. Dispositif d'entraînement (10, 20, 30), notamment pour un dispositif d'essuie-glace, comprenant au moins un arbre (13, 21, 32), une bande et/ou un cordon pouvant être enveloppé avec une certaine tension autour de l'au moins un arbre (13, 21, 32), la bande et/ou le cordon étant un ressort enroulé, pouvant être comprimé et/ou étiré (14, 23, 34), **caractérisé en ce que** le ressort (14, 23, 34) peut être comprimé et/ou étiré au moyen d'un champ magnétique électrique.

2. Dispositif d'entraînement (10, 20, 30) selon la revendication 1, **caractérisé en ce que** la tension agissant dans la bande et/ou dans le cordon est variable.

3. Dispositif d'entraînement (10, 30) selon la revendication 1 ou 2, **caractérisé en ce que** le ressort (14, 34) peut être connecté par l'une de ses extrémités à un élément de déclenchement mobile (15).

4. Dispositif d'entraînement (10) selon la revendication 3, **caractérisé en ce que** l'élément de déclenchement (15) est réalisé en forme de plaque.

5. Dispositif d'entraînement (10) selon la revendication 4, **caractérisé en ce que** l'élément de déclenchement en forme de plaque (15) se compose d'un matériau magnétique, notamment d'un matériau ferromagnétique.

6. Dispositif d'entraînement (30) selon la revendication 3, 4 ou 5, **caractérisé en ce que** l'élément de déclenchement est une saillie (33) disposée sur une roue dentée.

7. Dispositif d'entraînement (10, 20, 30) selon l'une quelconque des revendications 1 à 6, **caractérisé en ce que** l'au moins un arbre (13, 21, 32) est un arbre d'induit, un arbre d'une roue dentée (12, 22), ou similaire.

8. Dispositif d'entraînement (10, 20, 30) selon l'une quelconque des revendications 1 à 7, **caractérisé en ce que** le dispositif d'entraînement (10, 20, 30) présente au moins un moteur d'essuie-glace et/ou au moins un engrenage.

9. Dispositif d'entraînement (10, 20, 30) selon l'une quelconque des revendications 1 à 8, **caractérisé en ce qu'**il est connecté directement à au moins un bras d'essuie-glace.

10. Dispositif d'essuie-glace, notamment pour un véhicule automobile, **caractérisé en ce qu'**il présente un dispositif d'entraînement (10, 20, 30) selon l'une quelconque des revendications 1 à 9.
